# EUROPÄISCHE PATENTSCHRIFT

(11) **EP 0 957 242 B1**
(45) Veröffentlichungstag und Bekanntmachung des Hinweises auf die Patenterteilung: **31.10.2001**
(21) Anmeldenummer: 99107711.6
(22) Anmeldetag: 17.04.1999
(51) Int. Cl.: F01N 3/08, F02D 41/02, F01N 3/20

(54) **Stickoxidemissionsmindernde Abgasreinigungsanlage**
NOx emission reducing exhaust gas cleaning device
Dispositif d'épuration de gaz d'échappement pour réduire le taux d'oxyde d'azote

(30) Priorität: 09.05.1998 DE 19820828
(43) Veröffentlichungstag der Anmeldung: 17.11.1999
(73) Patentinhaber: DaimlerChrysler AG, 70567 Stuttgart (DE)
(72) Erfinder: Konrad, Brigitte, 89134 Blaustein (DE); Krutzsch, Bernd Dr., 73770 Denkendorf (DE); Voigtländer, Dirk, 70825 Korntal-Münchingen (DE)

(56) Entgegenhaltungen:
- EP-A- 0 773 354
- WO-A-97/19262

## Beschreibung

Die Erfindung bezieht sich auf eine Abgasreinigungsanlage mit einer ersten Katalysatoreinheit, die bei fetter Abgaszusammensetzung Ammoniak aus entsprechenden Abgasbestandteilen erzeugt, und mit einer dieser nachgeschalteten zweiten Katalysatoreinheit, die bei fetter Abgaszusammensetzung von der ersten Katalysatoreinheit erzeugtes Ammoniak zwischenspeichert und bei magerer Abgaszusammensetzung im Abgas enthaltene Stickoxide (NOₓ) einer Reduktionsreaktion unter Einsatz des zwischengespeicherten Ammoniaks als Reduktionsmittel unterzieht. Unter den Begriffen "fette Abgaszusammensetzung" und "magere Abgaszusammensetzung" soll dabei vorliegend die Zusammensetzung des Abgases verstanden werden, die sich bei fettem Betrieb, d.h. mit über dem stöchiometrischen Verhältnis liegendem Brennstoffanteil, bzw. magerem Betrieb, d.h. mit unter dem stöchiometrischen Verhältnis liegendem Brennstoffanteil, des das Abgas erzeugenden Verbrennungsprozesses verstanden werden. Eine solche Abgasreinigungsanlage ist beispielsweise für einen Kraftfahrzeugmotor verwendbar, um dessen Stickoxidemissionen niedrig zu halten.

Es ist beispielsweise für Kraftfahrzeug-Verbrennungsmotoren bekannt, diese zur Erzielung geringer Stickoxidemissionen alternierend im fetten und mageren Motorbetrieb zu fahren und in einer zugeordneten Abgasreinigungsanlage einen oder mehrere parallele Stickoxid-Adsorberkatalysatoren vorzusehen, die in mageren Motorbetriebsphasen Stickoxide adsorbieren und in fetten Motorbetriebsphasen wieder desorbieren, um sie mittels Abgasrückführung oder einer anderen Technik zu reduzieren.

Des weiteren sind Abgasreinigungsanlagen bekannt, bei denen ein Stickoxidreduktionsmittel von außen zugegeben wird, um im zugeführten Abgas enthaltene Stickoxide zu Stickstoff zu reduzieren.

Eine Abgasreinigungsanlage der eingangs genannten Art ist in der Offenlegungsschrift EP 0 773 354 A1 beschrieben und dient dort der Reinigung des Abgases einer Brennkraftmaschine. Die ammoniakerzeugende Katalysatoreinheit wird von einem Dreiwege-Katalysator gebildet, der bei fettem Motorbetrieb Ammoniak aus Stickoxiden und Wasserstoff, die im Abgas enthalten sind, synthetisiert. Der so erzeugte Ammoniak wird in der nachgeschalteten zweiten Katalysatoreinheit adsorbiert und dadurch zwischengespeichert. In Zeiträumen mit magerem Brennkraftmaschinenbetrieb läßt der Dreiwege-Katalysator die im Abgas enthaltenen Stickoxide zur nachgeschalteten zweiten Katalysatoreinheit passieren, wo dann der Ammoniak wieder freigesetzt wird und als Reduktionsmittel für eine Reduktionsreaktion dient, mit der die Stickoxide unter gleichzeitiger Oxidation des Ammoniaks in Stickstoff umgewandelt werden. Die beiden Katalysatoreinheiten beinhalten geeignete Katalysatormaterialien zur Erfüllung der oben genannten Funktionen, z.B. Palladium (Pd) oder Cer (Ce) für den Dreiwege-Katalysator und ein Zeolith-, Siliziumoxid-, Aluminiumoxid- und/oder Titanoxid-Material mit darauf aufgebrachtem Kupfer (Cu), Eisen (Fe), Platin (Pt), Palladium (Pd) und/oder Rhodium (Rh) für die Ammoniak adsorbierende und oxidierende Katalysatoreinheit. Sobald im Magerbetrieb die zwischengespeicherte Ammoniakmenge erschöpft ist, wird auf fetten Brennkraftmaschinenbetrieb umgeschaltet. Eine Schwierigkeit dieser Anlage besteht darin, daß im fetten Betrieb deutlich weniger Stickoxide im Abgas enthalten sind und daher entsprechend wenig Ammoniak erzeugt wird bzw. relativ lange im hinsichtlich Brennstoffverbrauch ungünstigen fetten Betrieb gefahren werden muß, um eine bestimmte, nennenswerte Menge an Ammoniak zu gewinnen.

Der Erfindung liegt als technisches Problem die Bereitstellung einer Abgasreinigungsanlage der eingangs genannten Art zugrunde, mit der sich der Stickoxidgehalt von Verbrennungsabgasen, wie Kraftfahrzeugmotorabgasen, effektiv und mit vergleichsweise geringem Aufwand verringern läßt und der zugehörige Verbrennungsprozeß mit möglichst hohem Magerbetriebsanteil gefahren werden kann.

Die Erfindung löst dieses Problem die durch die Bereitstellung einer Abgasreinigungsanlage mit den Merkmalen des Anspruchs 1. Bei dieser Anlage ist der bei fetter Abgaszusammensetzung aus entsprechenden Abgasbestandteilen Ammoniak erzeugenden Katalysatoreinheit eine Katalysatoreinheit vorgeschaltet, die bei magerer Abgaszusammensetzung im Abgas enthaltene Stickoxide zwischenspeichert und bei fetter Abgaszusammensetzung zuvor zwischengespeicherte Stickoxide wieder freisetzt. Diese vorgeschaltete Katalysatoreinheit kann beispielsweise von einem herkömmlichen Stickoxid-Adsorberkatalysator gebildet sein, der bei magerer Abgaszusammensetzung die im Abgas enthaltenen Stickoxide adsorbiert und die adsorbierten Stickoxide bei fetter Abgaszusammensetzung wieder desorbiert. In dieser Katalysatoreinheit kann bei magerer Abgaszusammensetzung, d.h. im Magerbetrieb des zugehörigen Verbrennungsprozesses, in welchem deutlich mehr Stickoxide anfallen als bei fettem Verbrennungsbetrieb, eine vergleichsweise große Stickoxidmenge zwischengspeichert werden. Wenn diese Katalysatoreinheit mit zwischengespeicherten Stickoxiden gesättigt ist, gelangen bei weiterem Magerbetrieb die im Abgas enthaltenen Stickoxide durch die im Magerbetrieb im wesentlichen passiv bleibende, ammoniakerzeugende Katalysatoreinheit hindurch zur Ammoniak zwischenspeichernden Katalysatoreinheit, wo sie unter Freisetzung des als Reduktionsmittel wirkenden, zwischengespeicherten Ammoniaks zu Stickstoff reduziert werden. Bei fetter Abgaszusammensetzung, d.h. mit überstöchiometrischem, brennstoffreichem Gemisch gefahrenem Verbrennungsprozeß, werden die während des vorangegangenen Magerbetriebs in der stromaufwärtigen Katalysatoreinheit zwischengespeicherten Stickoxide freigesetzt und in der anschließenden Katalysatoreinheit zur Erzeugung von Ammoniak genutzt, der dann in der stromabwärtigen Katalysatoreinheit zwischengespeichert wird.

Durch diese Nutzung von im Magerbetrieb in viel größerer Menge als im fetten Betrieb anfallenden zwischengespeicherten Stickoxiden kann in einer jeweiligen Phase mit fetter Verbrennungsführung eine entsprechend große Ammoniakmenge erzeugt und zwischengespeichert werden, die dann zur effektiven Stickoxidreduktion in einer darauffolgenden Magerbetriebsphase zur Verfügung steht. Insgesamt ermöglicht dies einen Betrieb mit hohem Magerbetriebsanteil und folglich mit entsprechend geringem Brennstoffverbrauch.

Eine vorteilhafte Ausführungsform der Erfindung ist in den Zeichnungen dargestellt und wird nachfolgend beschrieben. Hierbei zeigen:
- Fig. 1: ein schematisches Blockdiagramm eines Verbrennungsmotors mit zugehöriger Abgasreinigungsanlage in einer Magerbetriebsphase und
- Fig. 2: den Motor mit Abgasreinigungsanlage von Fig. 1 in einer fetten Motorbetriebsphase.

In den Figuren ist schematisch ein Verbrennungsmotor 1, wie z.B. ein Kraftfahrzeugmotor, gezeigt, in dessen Abgasstrang eine Abgasreinigungsanlage eingebracht ist, welche drei seriell hintereinandergeschaltete Katalysatoreinheiten 2, 3, 4, wie gezeigt, sowie je nach Bedarf weitere, hier nicht weiter interessierende und daher nicht dargestellte Komponenten umfaßt. Bei den drei Katalysatoreinheiten handelt es sich in Strömungsrichtung gesehen um einen Stickoxid-Adsorptionskatalysator 2, einen diesen nachgeschalteten, ammoniakerzeugenden Katalysator 3 und einen anschließenden Ammoniak-Adsorptionskatalysator 4. Die drei Katalysatoreinheiten 2, 3, 4 sind von herkömmlichem Aufbau und beinhalten ein für die jeweils zu erfüllende Funktion geeignetes Katalysatormaterial, wie dies aus dem oben genannten Stand der Technik an sich bekannt ist und hier keiner näheren Erläuterung bedarf. Für die ammoniakerzeugende Katalysatoreinheit 3 kann beispielsweise ein Platin-Katalysatormaterial eingesetzt werden.

Die zur Ammoniakadsorption bei fettem Motorbetrieb und zur Ammoniakdesorption und Stickoxidreduktion im mageren Motorbetrieb dienende Katalysatoreinheit 4 kann beispielsweise von einem herkömmlichen, sogenannten SCR(selective catalytic reduction)-Katalysator gebildet sein, in welchem die Stickoxide einer selektiven katalytischen Reduktionsreaktion unterzogen werden, wobei vorliegend Ammoniak als ein Reduktionsmittel fungiert. Ein solcher herkömmlicher SCR-Katalysator besitzt eine ausreichende Ammoniak-Zwischenspeicherfähigkeit. Im folgenden wird anhand der Figuren auf die verschiedenen Funktionen der drei Katalysatoreinheiten 2, 3, 4 bei mager betriebenem Motor 1 einerseits und bei fett betriebenem Motor 1 andererseits näher eingegangen.

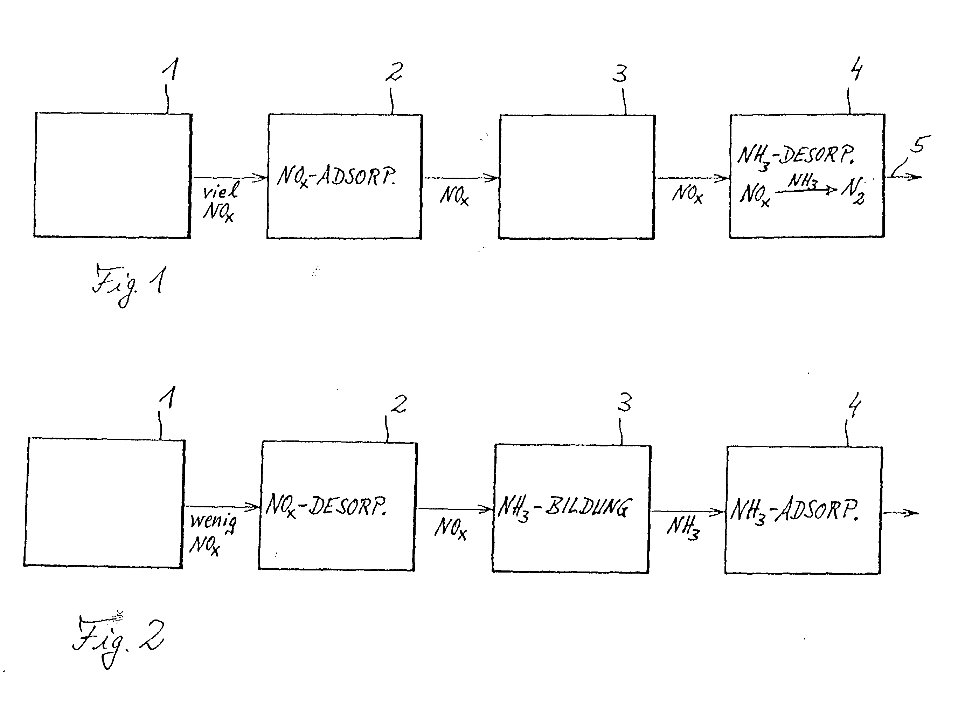

Fig. 1 illustriert die Situation während einer Magerbetriebsphase. In diesem Magerbetrieb wird der Motor 1 mit unterstöchiometrischem Kraftstoffanteil, d.h. sauerstoffreich, betrieben. Die daraus resultierende magere Abgaszusammensetzung beinhaltet eine vergleichsweise hohe Stickoxidmenge. Das stickoxidreiche Abgas gelangt in den Stickoxid-Adsorberkatalysator 2, der eine signifikante Menge an Stickoxiden adsorbieren und damit zwischenspeichern kann. Soweit die Stickoxide nicht von diesem Katalysator 2 adsorbiert werden, insbesondere wenn dessen Stickoxidspeicherkapazität erreicht ist, gelangen die Stickoxide mit dem Abgas weiter durch den in dieser Magerbetriebsphase passiv bleibenden, ammoniakerzeugenden Katalysator 3 hindurch zur anschließenden Katalysatoreinheit 4. In dieser Katalysatoreinheit 4 wird Ammoniak, der von ihr während einer vorangegangenen fetten Motorbetriebsphase adsorbiert und damit zwischengespeichert wurde, desorbiert und fungiert als Reduktionsmittel, mit dessen Hilfe die im Abgas enthaltenen Stickoxide zu Stickstoff reduziert werden. Bei dieser Reaktion wird gleichzeitig der Ammoniak oxidiert. Das aus dieser Katalysatoreinheit 4 austretende Abgas 5 ist damit weitgehend von Stickoxiden befreit.

Fig. 2 illustriert eine Phase mit fettem Motorbetrieb, d.h. einen Betrieb mit überstöchiometrischem Kraftstoffanteil. In dieser Betriebsart ergibt sich ein im Vergleich zum Magerbetrieb viel geringerer Stickoxidanteil im Motorabgas. Der Stickoxid-Adsorptionskatalysator 2 arbeitet während der fetten Motorbetriebsphase im Desorptionsbetrieb und setzt dadurch die in ihm während einer vorangegangen Magerbetriebsphase zwischengespeicherten Stickoxide wieder frei. Die desorbierten Stickoxide gelangen mit dem zuvor stickoxidarmen Abgasstrom in die anschließende ammoniakerzeugende Katalysatoreinheit 3. Letztere fungiert während des fetten Motorbetriebs als aktiv Ammoniak erzeugende Einheit, indem sie Ammoniak aus Bestandteilen, die im zugeführen Abgas enthalten sind, synthetisiert, insbesondere unter Nutzung der Stickoxide und von Wasserstoff, der in der fetten Abgaszusammensetzung vorhanden ist. Da für diese Ammoniakerzeugung nicht nur die vom Motor 1 in dieser fetten Betriebsphase emittierten Stickoxide, sondern zusätzlich die während des vorhergehenden Magerbetriebs mit hohem Stickoxidausstoß des Motors 1 im Stickoxid-Adsorptionskatalysator 2 zwischengespeicherten Stickoxide benutzt werden, läßt sich entsprechend viel Ammoniak gewinnen, der dann in der nachgeschalteten Katalysatoreinheit 4 durch Adsorption zwischengespeichert wird und somit für eine nächste Magerbetriebsphase als Reduktionsmittel für die Stickoxidreduktion zur Verfügung steht.

Es versteht sich, daß in eine oder mehrere der drei gezeigten Katalysatoreinheiten 2, 3, 4 oder in zusätzlichen Abgasreinigungskomponenten, die stromaufwärts, stromabwärts und/oder zwischen den drei gezeigten Katalysatoreinheiten 2, 3, 4 angeordnet sein können, je nach Bedarf weitere Abgasreinigungsfunktionen herkömmlicher Art vorgesehen sein können. Weiter versteht sich, daß die Speicherkapazitäten des Stickoxid-Adsorberkatalysators 2 einerseits und des Ammoniak-Adsorptionskatalysators 4 andererseits geeignet aufeinander abgestimmt sind, um sicherzustellen, daß im wesentlichen der gesamte, während einer fetten Motorbetriebsphase in der betreffenden Katalysatoreinheit 3 unter Verwendung der zwischengespeicherten Stickoxide gebildete Ammoniak vom Ammoniak-Adsorptionskatalysator zwischengespeichert werden kann.

Aus der obigen Beschreibung wird deutlich, daß der Motor 1, wenn er alternierend mit fetten und mageren Betriebsphasen gefahren wird, aufgrund der ihm zugeordneten Abgasreinigungsanlage mit einem hohen Magerbetriebsanteil bei kontinuierlich geringer Stickoxidemission betrieben werden kann. Denn der fette Motorbetrieb braucht jeweils nur so lange aufrechterhalten zu werden, bis die zuvor im Stickoxid-Adsorptionskatalysator 2 zwischengespeicherten Stickoxide freigesetzt wurden und unter Verwendung derselben in der nachgeschalteten Katalysatoreinheit 3 eine entsprechende Ammoniakmenge gebildet wurde. Die hierfür erforderliche Zeitdauer ist beträchtlich kürzer als die zur Erzeugung derselben Ammoniakmenge ohne Verwendung des Stickoxid-Adsorptionskatalysators 2 benötigte Zeitdauer, da der Stickoxid-Adsorberkatalysator 2 viel rascher eine bestimmte Stickoxidmenge zur Verfügung stellen kann als der fett betriebene Motor 1. Hervorzuheben ist außerdem, daß bei der erfindungsgemäßen Abgasreinigungsanlage eine externe Zuführung eines Stickoxidreduktionsmittels, z.B. durch externe Einspritzung von Ammoniak in den Abgasstrang, nicht zwingend erforderlich ist, sondern allenfalls als zusätzliche, unterstützende Maßnahme in Betracht kommt.

Die obige Beschreibung eines vorteilhaften Beispiels zeigt somit, daß die erfindungsgemäße Abgasreinigungsanlage einen brennstoffverbrauchsoptimalen Betrieb einer Verbrennungseinrichtung, wie z.B. eines Verbrennungsmotors oder einer Heizungsanlage, bei gleichzeitig geringer Stickoxidemission ermöglicht.

## Patentansprüche

1. Abgasreinigungsanlage, insbesondere für einen Kraftfahrzeug-Verbrennungsmotor, mit
- einer ersten Katalysatoreinheit (3), die bei fetter Abgaszusammensetzung Ammoniak (NH₃) aus entsprechenden Abgasbestandteilen erzeugt, und
- einer der ersten nachgeschalteten zweiten Katalysatoreinheit (4), die bei fetter Abgaszusammensetzung von der ersten Katalysatoreinheit erzeugten Ammoniak zwischenspeichert und bei magerer Abgaszusammensetzung im Abgas enthaltene Stickoxide (NOₓ) einer Reduktionsreaktion unter Einsatz des zwischengespeicherten Ammoniaks als Reduktionsmittel unterzieht,
**gekennzeichnet durch**
- eine der ersten Katalysatoreinheit (3) vorgeschaltete dritte Katalysatoreinheit (2), die bei magerer Abgaszusammensetzung im Abgas enthaltene Stickoxide zwischenspeichert und bei fetter Abgaszusammensetzung zuvor zwischengespeicherte Stickoxide wieder freisetzt.

## Claims

1. Waste gas cleaning installation, in particular for a motor vehicle internal combustion engine, with
- a first catalytic converter unit (3), which in the event of greasy waste gas composition produces ammonia (NH₃) from corresponding waste gas components, and
- a second catalytic converter unit (4) switched after the first unit, wherein this second catalytic converter unit (4) in the event of greasy waste gas composition intermediately stores ammonia produced by the first catalytic converter unit and in the event of non-greasy waste gas composition subjects nitric oxide (NOₓ) contained in the waste gas to a reduction reaction using the intermediately stored ammonia as a means of reduction,
**characterised by**
- a third catalytic converter unit (2) switched before the first catalytic converter unit (3), wherein this third catalytic converter unit (2) in the event of non-greasy waste gas composition intermediately stores nitric oxide contained in the waste gas and in the event of greasy waste gas composition again releases nitric oxide which has previously been intermediately stored.

## Revendications

1. Installation d'épuration des gaz d'échappement, en particulier pour un moteur à combustion pour véhicules automobiles, avec
- une première unité à catalyseur (3), générant de l'ammoniaque (NH₃) à partir de composants correspondants des gaz d'échappement, dans le cas où la position de ces gaz d'échappement est riche, et
- une deuxième unité à catalyseur (4), installée en aval de la première unité, qui, lorsque la composition des gaz d'échappement est riche, met en stockage intermédiaire l'ammoniaque généré par la première unité à catalyseur et, lorsque la composition des gaz d'échappement est pauvre, soumet les oxydes d'azote (NOₓ) contenus dans les gaz d'échappement à une réaction de réduction avec mise en oeuvre de l'ammoniaque mis en stockage intermédiaire, en tant qu'agent réducteur,
**caractérisé par**
- une troisième unité à catalyseur (2) installée en amont de la première unité à catalyseur (3) qui, lorsque la composition des gaz d'échappement est pauvre, met en stockage intermédiaire les oxydes d'azote contenus dans les gaz d'échappement et, lorsque la composition des gaz d'échappement est riche, dégage de nouveau les oxydes d'azote ayant été précédemment mis en stockage intermédiaire.
